# EUROPÄISCHE PATENTSCHRIFT

(11) **EP 1 848 619 B1**
(45) Veröffentlichungstag und Bekanntmachung des Hinweises auf die Patenterteilung: **16.09.2009**
(21) Anmeldenummer: 06708266.9
(22) Anmeldetag: 14.02.2006
(51) Int. Cl.: B60T 8/88, B60T 17/22

(54) **BREMSVORRICHTUNG FÜR EIN SCHIENENFAHRZEUG**
BRAKING DEVICE FOR A RAIL VEHICLE
DISPOSITIF DE FREINAGE DESTINE A UN VEHICULE SUR RAILS

(30) Priorität: 17.02.2005 DE 102005007336
(43) Veröffentlichungstag der Anmeldung: 31.10.2007
(73) Patentinhaber: SIEMENS AKTIENGESELLSCHAFT, 80333 München (DE)
(72) Erfinder: WIESAND, Manfred, 90559 Burgthann (DE)
(86) Internationale Anmeldenummer: PCT/EP2006/050929
(87) Internationale Veröffentlichungsnummer: WO 2006/087326

(56) Entgegenhaltungen:
- EP-A- 0 999 107
- DE-A1- 19 848 990
- DE-U1- 20 319 547
- US-B1- 6 275 165

## Beschreibung

Die Erfindung betrifft eine Bremsvorrichtung für ein Schienenfahrzeug, wobei eine Bremssteuereinheit mit Bremseinheiten über ein Datenbussystem in Verbindung steht.

Eine Bremsvorrichtung ist in jedem Schienenfahrzeug vorhanden. Sie wird ausgelöst entweder durch den Fahrzeugführer, der einen Schalter oder ein Ventil betätigt, oder durch eine Sicherungseinrichtung. Für den Einsatz bei besonderer Gefahr, wie zum Beispiel einem Brand, ist in einem Schienenfahrzeug eine schnell wirkende Bremsvorrichtung vorhanden. Bekannte schnell wirkende Bremsvorrichtungen sind stets so ausgelegt, dass das Schienenfahrzeug sofort bis zum Stillstand abgebremst wird und dass ein Lösen der Bremse während des Bremsvorganges oder auch im Stillstand nur schwer möglich ist. Dadurch soll die Sicherheit für das Schienenfahrzeug besonders groß sein.

Eine schnell wirkende Bremsvorrichtung wurde bisher realisiert, indem zum Beispiel bei einer Druckluftbremse die Hauptluftleitung vollständig zu entlüften war. Durch dieses Entlüften werden die Bremseinheiten aktiviert und die maximale Bremskraft wird erreicht.

Nach einem anderen bekannten Beispiel für eine schnell wirkende Bremsvorrichtung ist durch einen Zug eine elektrische Schleife gelegt, in die alle Bremseinheiten eingebunden sind. Wenn durch eine Unterbrechung der elektrischen Schleife die Spannung an den Bremseinheiten abfällt, dann schließen diese Bremseinheiten mit maximaler Bremskraft.

Aus der DE 101 28 897 C1 ist eine Bremsvorrichtung bekannt, bei der ein Datenbussystem Bremssteuereinheit und Bremseinheiten verbindet.

Mit einer solchen Bremsvorrichtung war es bisher nicht möglich, bei einem Defekt im Bremssystem kurzfristig die maximale Bremskraft zu erzielen.

Eine Bremsvorrichtung gemäß dem Oberbegriff des Anspruchs 1 ist aus der DE 19848990 bekannt.

Der Erfindung liegt die Aufgabe zugrunde, eine Bremsvorrichtung anzugeben, die durch Einsatz eines Datenbussystems schnell wirkt, es trotzdem möglich macht, dass bei einem Defekt im Bremssystem schnell die maximale Bremskraft zur Verfügung steht, und gleichzeitig besonders hohen Sicherheitsanforderungen genügt.

Die Aufgabe wird gemäß der Erfindung gelöst durch eine Bremsvorrichtung für ein Schienenfahrzeug, wobei mindestens eine Bremssteuereinheit mit Bremseinheiten über ein Datenbussystem in Verbindung steht, das zum Übermitteln von Telegrammen dient und dem eine Fail-Safe-Einrichtung zugeordnet ist, wobei die Fail-Safe-Einrichtung zum Erkennen von Übertragungsfehlern dient, wobei die Fail-Safe-Einrichtung dazu ausgangsseitig mit Bremseinheiten der Betriebsbremse und der Notbremse in Verbindung steht, zum Auslösen der Bremseinheiten, wenn ein Übertragungsfehler vorliegt, wobei die mindestens eine Bremssteuereinheit eine Eingangsschnittstelle für Signale hat und wobei an der Eingangsschnittstelle Signale zum Bremsen Oder-verknüpft und Signale zum Notfahren Und-verknüpft sind.

Damit wird der Vorteil erzielt, dass die Bremseinheiten direkt über Signale angesteuert werden, die in der Regel digitale Signale sind. Diese sind weniger störanfällig als veränderliche Größen, wie z. B. der Luftdruck in einer Leitung oder die elektrische Spannung, die früher zum Ansteuern der Bremseinheiten dienten. Trotzdem ist sichergestellt, dass bei einem Defekt im Bremssystem sofort die maximale Bremskraft erzielt wird, dass eine automatische Schaltung der Bremssteuereinheit, ohne dass ein Fahrzeugführer eingreift, möglich ist, und dass eine Notbremsung sehr schnell durch ein einziges Signal ausgelöst werden kann, während ein Unterbrechen der Notbremsung nur dann möglich ist, wenn mehrere UND-verknüpfte Signale ein Lösen der Bremse verlangen. Folglich ist ein ungewolltes Unterbrechen der Notbremsung ausgeschlossen.

Beispielsweise ist eine Einrichtung zum Erfassen der Zeitspanne zwischen Absenden und Eintreffen eines Telegramms über das Datenbussystem vorhanden, die mit einem Schwellwertgeber und einer Steuereinrichtung verbunden ist, zum Auslösen der Bremseinheiten, wenn die Zeitspanne größer als der Schwellwert des Schwellwertgebers ist.

Es wird der Vorteil erzielt, dass allein durch Erkennen einer zu großen Zeitspanne ein Defekt im Bremssystem leicht zu bemerken ist.

Beispielsweise weisen die Bremseinheiten Module zur Überprüfung der angekommenen Telegramme auf. Es können also Nachrichten mit den Telegrammen übersandt werden.

Beispielsweise enthalten die Telegramme jeweils einen Hinweis auf die absendende Bremssteuereinheit. Es lässt sich also bei einem Triebzug mit zwei Fahrerständen erkennen, welcher Fahrerstand gerade aktiviert ist. Telegramme, die dann scheinbar von dem nicht aktivierten Fahrerstand ausgehen, können unbeachtet bleiben.

Beispielsweise ist eine Bremssteuereinheit im Fahrerstand angeordnet, der zum Aktivieren ein Schalter zugeordnet ist. Damit wird in besonders einfacher Weise ermöglicht, dass der Fahrzeugführer, falls erforderlich, die Bremssteuereinheit und damit die gesamte schnell wirkende Bremsvorrichtung abschalten kann. Das ist besonders dann sinnvoll, wenn der Zug anderenfalls in einem Tunnel zum Stehen kommen würde, was z. B. bei einem Brand im Zug gefährlich wäre.

Beispielsweise ist das Datenbussystem über ein erstes Gateway mit einem Zugbus verbunden, der über ein zweites Gateway mit einem Datenbussystem eines angekuppelten anderen Schienenfahrzeugs verbunden ist. Durch den Einsatz dieses Zugbusses ist es möglich mehrere vollständige Triebzüge, die zum Beispiel jeweils zwei Fahrerstände haben, miteinander zu verbinden, wobei alle Bremseinheiten von einem Fahrerstand aus bedient werden.

Beispielsweise enthalten die über den Zugbus ankommenden Telegramme einen Hinweis auf das, der absendenden Bremssteuereinheit zugeordnete, erste Gateway. Damit wird indirekt sichergestellt, dass im angekuppelten Zug nur diejenigen Telegramme beachtet werden, die vom Fahrerstand des anderen Zuges kommen. Störungen werden dadurch weitgehend vermieden.

Zur Verbesserung der Zuverlässigkeit sind die Telegramme beispielsweise redundant übermittelbar.

Die mindestens eine Bremssteuereinheit ist beispielsweise Teil eines Zugsicherungsgerätes. Dieses Zugsicherungsgerät ermöglicht einen fahrerlosen Betrieb und sorgt durch die Eingliederung der Bremssteuereinheit für ein automatisiertes Bremsen mit allen bisher genannten Vorteilen.

Beispielsweise weisen die Bremseinheiten eigene Spannungsversorgungen auf. Dadurch wird vorteilhaft eine Energieversorgungsleitung, die durch das ganze Schienenfahrzeug hindurchgeführt werden müsste, nicht benötigt. Über das Datenbussystem kann nämlich keine Energieversorgung erfolgen.

Beispielsweise weisen die Bremseinheiten Sensoren für den Bremsdruck auf, die mit der mindestens einen Bremssteuereinheit in Verbindung stehen. Auf diese Weise wird der Vorteil erzielt, dass ein verminderter Bremsdruck dem Fahrzeugführer mitgeteilt werden kann.

Beispielsweise ist an der Eingangsschnittstelle ein Notfahrschalter zum Überbrücken von Bremsbefehlen angeschlossen. Durch das Betätigen des Notfahrschalters, zum Beispiel durch den Fahrzeugführer, werden alle bisherigen Befehle außer Kraft gesetzt, so dass ein Schienenfahrzeug bevor es anhält eine Gefahrenstelle noch verlassen kann. Eine solche Gefahrenstelle kann ein Tunnel sein.

Beispielsweise sind zwei UND-verknüpfte Notfahrschalter vorhanden.

Für den fahrerlosen Betrieb ist an der Eingangsschnittstelle beispielsweise ein Sensorsystem zum Überwachen des Gleisbereichs angeschlossen. Ein derartiges Sensorsystem, das beispielsweise eine bildaufzeichnende Kamera sein kann, gewährleistet zuverlässig einen ungestörten fahrerlosen Betrieb, da Hindernisse im Gleisbereich so rechtzeitig zu erkennen sind, dass das Schienenfahrzeug vor dem Hindernis anhalten kann.

Beispielsweise ist die mindestens eine Bremssteuereinheit Teil einer Zentrale, die mit ihrer Eingangsschnittstelle und mit dem Datenbussystem drahtlos verbunden ist. Damit wird eine zentrale Auswertung der Bremsvorgänge auch außerhalb des Schienenfahrzeuges ermöglicht.

Mit der Bremsvorrichtung nach der Erfindung wird insbesondere der Vorteil erzielt, dass die Bremseinheiten schnell und zuverlässig zu betätigen sind und bei einem Defekt im Bremssystem trotzdem eine Schnellbremsung möglich ist. Darüber hinaus kann bei Bedarf auch kurzfristig der Bremsvorgang unterbrochen werden, damit das Schienenfahrzeug nicht in einem Tunnel anhält.

## Patentansprüche

1. Bremsvorrichtung für ein Schienenfahrzeug, wobei mindestens eine Bremssteuereinheit mit Bremseinheiten über ein Datenbussystem in Verbindung steht, das zum Übermitteln von Telegrammen dient und dem eine Fail-Safe-Einrichtung zugeordnet ist, **dadurch gekennzeichnet, dass** die Fail-Safe-Einrichtung zum Erkennen von Übertragungsfehlern dient, dass die Fail-Safe-Einrichtung dazu ausgangsseitig mit Bremseinheiten der Betriebsbremse und der Notbremse in Verbindung steht, zum Auslösen der Bremseinheiten, wenn ein Übertragungsfehler vorlegt, dass die mindestens eine Bremssteuereinheit eine Eingangsschnittstelle für Signale hat und dass an der Eingangsschnittstelle Signale zum Bremsen Oder-verknüpft und Signale zum Notfahren Und-verknüpft sind.

2. Bremsvorrichtung nach Anspruch 1, **dadurch gekennzeichnet, dass** eine Einrichtung zum Erfassen der Zeitspanne zwischen Absenden und Eintreffen eines Telegrammes über das Datenbussystem vorhanden ist, die mit einem Schwellwertgeber und einer Steuereinrichtung verbunden ist, zum Auslösen der Bremseinheiten wenn die Zeitspanne größer als der Schwellwert des Schwellwertgebers ist.

3. Bremsvorrichtung nach einem der Ansprüche 1 oder 2, **dadurch gekennzeichnet, dass** die Bremseinheiten Module zur Überprüfung der angekommenen Telegramme aufweisen.

4. Bremsvorrichtung nach einem der Ansprüche 1 bis 3, **dadurch gekennzeichnet, dass** die Telegramme einen Hinweis auf die absendende Bremssteuereinheit enthalten.

5. Bremsvorrichtung nach einem der Ansprüche 1 bis 4, **dadurch gekennzeichnet, dass** eine Bremssteuereinheit im Fahrerstand angeordnet ist, der zum Aktivieren ein Schalter zugeordnet ist.

6. Bremsvorrichtung nach einem der Ansprüche 1 bis 5, **dadurch gekennzeichnet, dass** das Datenbussystem über ein erstes Gateway mit einem Zugbus verbunden ist, der über ein zweites Gateway mit einem Datenbussystem eines angekuppelten anderen Schienenfahrzeugs verbunden ist.

7. Bremsvorrichtung nach Anspruch 6, **dadurch gekennzeichnet, dass** die über den Zugbus ankommenden Telegramme einen Hinweis auf das der absendenden Bremssteuereinheit zugeordnete erste Gateway enthalten.

8. Bremsvorrichtung nach einem der Ansprüche 1 bis 7, **dadurch gekennzeichnet, dass** die Telegramme redundant übermittelbar sind.

9. Bremsvorrichtung nach einem der Ansprüche 1 bis 8, **dadurch gekennzeichnet, dass** die mindestens eine Bremssteuereinheit Teil eines Zugsicherungsgerätes ist.

10. Bremsvorrichtung nach einem der Ansprüche 1 bis 9, **dadurch gekennzeichnet, dass** die Bremseinheiten eigene Spannungsversorgungen aufweisen.

11. Bremsvorrichtung nach einem der Ansprüche 1 bis 10, **dadurch gekennzeichnet, dass** die Bremseinheiten Sensoren für den Bremsdruck aufweisen, die mit der mindestens einen Bremssteuereinheit in Verbindung stehen.

12. Bremsvorrichtung nach einem der Ansprüche 1 bis 11, **dadurch gekennzeichnet, dass** an der Eingangsschnittstelle ein Notfahrschalter zum Überbrücken von Bremsbefehlen angeschlossen ist.

13. Bremsvorrichtung nach Anspruch 12, **dadurch gekennzeichnet, dass** zwei Und-verknüpfte Notfahrschalter vorhanden sind.

14. Bremsvorrichtung nach einem der Ansprüche 1 bis 13, **dadurch gekennzeichnet, dass** für den fahrerlosen Betrieb an der Eingangsschnittstelle ein Sensorsystem zum Überwachen des Gleisbereichs angeschlossen ist.

15. Bremsvorrichtung nach einem der Ansprüche 1 bis 14, **dadurch gekennzeichnet, dass** die mindestens eine Bremssteuereinheit Teil einer Zentrale ist, die mit ihrer Eingangsschnittstelle und mit dem Datenbussystem drahtlos verbunden ist.

## Claims

1. Braking device for a rail vehicle, wherein at least one brake control unit is connected to brake units via a data bus system which is used to transmit telegrams and which is assigned a fail-safe device, **characterized in that** the fail-safe device is used to detect transmission errors, **in that** the fail-safe device is connected, for this purpose, at the output end to brake units of the service brake and of the emergency brake, in order to trigger brake units if a transmission error occurs, **in that** the at least one brake control unit has an input interface for signals, and **in that** an OR logic operation is carried out on signals for braking and an AND logic operation is carried out on signals for emergency travel mode, at the input interface.

2. Braking device according to Claim 1, **characterized in that** a device for detecting the time period between the outputting of a telegram and its arrival via the data bus system is provided, which device is connected to a threshold value transmitter and a control device, in order to trigger the brake units if the time period is longer than the threshold value of the threshold value transmitter.

3. Braking device according to one of Claims 1 or 2, **characterized in that** the brake units have modules for checking the telegrams which have arrived.

4. Braking device according to one of Claims 1 to 3, **characterized in that** the telegrams contain an indication of the outputting brake control unit.

5. Braking device according to one of Claims 1 to 4, **characterized in that** a brake control unit, which is assigned a switch for the purpose of activation, is arranged in the driver's cab.

6. Braking device according to one of Claims 1 to 5, **characterized in that** the data bus system is connected via a first gateway to a train bus which is connected via a second gateway to a data bus system of another, coupled rail vehicle.

7. Braking device according to Claim 6, **characterized in that** the telegrams which arrive via the train bus contain an indication of the first gateway which is assigned to the outputting brake control unit.

8. Braking device according to one of Claims 1 to 7, **characterized in that** the telegrams can be transmitted redundantly.

9. Braking device according to one of Claims 1 to 8, **characterized in that** the at least one brake control unit is part of a train protection device.

10. Braking device according to one of Claims 1 to 9, **characterized in that** the brake units have their own voltage supplies.

11. Braking device according to one of Claims 1 to 10, **characterized in that** the brake units have sensors for the brake pressure, which sensors are connected to the at least one brake control unit.

12. Braking device according to one of Claims 1 to 11, **characterized in that** an emergency travel mode for bypassing braking commands switch is connected to the input interface.

13. Braking device according to Claim 12, **characterized in that** two emergency travel mode switches on which an AND logic operation has been carried out are provided.

14. Braking device according to one of Claims 1 to 13, **characterized in that** a sensor system for monitoring the track region is connected for driverless operation to the input interface.

15. Braking device according to one of Claims 1 to 14, **characterized in that** the at least one brake control unit is part of a control center which is connected to an input interface and to the data bus system in a wireless fashion.

## Revendications

1. Dispositif de freinage d'un véhicule ferroviaire, dans lequel au moins une unité de commande de freinage est en liaison avec des unités de freinage par un système de bus de données qui sert à transmettre des télégrammes et auquel est associé un dispositif Fail-Safe, **caractérisé en ce que** le dispositif Fail-Safe sert à détecter des erreurs de transmission, **en ce que** le dispositif Fail-Safe est à cet effet en communication du côté de la sortie avec des unités de freinage du frein de service et du frein de secours pour déclencher les unités de freinage lorsqu'il y a une erreur de transmission, **en ce que** la au moins une unité de commande de freinage a une interface d'entrée pour des signaux et **en ce que** sur l'interface d'entrée des signaux de freinage sont soumis à une combinaison logique OU des signaux de secours sont soumis à une combinaison logique ET.

2. Dispositif de freinage suivant la revendication 1, **caractérisé en ce qu'**il y a un dispositif de détection du laps de temps entre l'émission et l'arrivée d'un télégramme par le système de bus de données, dispositif qui est relié à un indicateur de valeur de seuil et, à un dispositif de commande, pour le déclenchement des unités de freinage lorsque le laps de temps est plus grand que la valeur de seuil de l'indicateur de valeur de seuil.

3. Dispositif de freinage suivant l'une des revendications 1 ou 2, **caractérisé en ce que** les unités de freinage ont des modules de contrôle des télégrammes qui sont arrivés.

4. Dispositif de freinage suivant l'une des revendications 1 à 3, **caractérisé en ce que** les télégrammes contiennent une indication sur l'unité de commande de freinage émettrice.

5. Dispositif de freinage suivant l'une des revendications 1 à 4, **caractérisé en ce qu'**une unité de commande de freinage est disposée dans la cabine du mécanicien, unité à laquelle un commutateur est associé pour l'activation.

6. Dispositif de freinage suivant l'une des revendications 1 à 5, **caractérisé en ce que** le système de bus de données est relié par une première passerelle à un bus de train qui est relié par une deuxième passerelle à un système de bus de données d'un autre véhicule ferroviaire accouplé.

7. Dispositif de freinage suivant la revendication 6, **caractérisé en ce que** les télégrammes arrivant par le bus de train contiennent une indication sur la première passerelle associée à l'unité de commande de freinage émettrice.

8. Dispositif de freinage suivant l'une des revendications 1 à 7, **caractérisé en ce que** les télégrammes peuvent être transmis de manière redondante.

9. Dispositif de freinage suivant l'une des revendications 1 à 8, **caractérisé en ce que** la au moins une unité de commande de freinage fait partie d'un appareil de protection des trains.

10. Dispositif de freinage suivant l'une des revendications 1 à 9, **caractérisé en ce que** les unités de freinage ont leur propre alimentation en tension.

11. Dispositif de freinage suivant l'une des revendications 1 à 10, **caractérisé en ce que** les unités de freinage ont des capteurs pour la pression de freinage, qui sont en liaison avec la au moins une unité de commande de freinage.

12. Dispositif de freinage suivant l'une des revendications 1 à 11, **caractérisé en ce qu'**un commutateur de secours est raccordé à l'interface d'entrée pour court-circuiter des instructions de freinage.

13. Dispositif de freinage suivant la revendication 12, **caractérisé en ce qu'**il y a deux commutateurs de secours soumis à une combinaison logique ET.

14. Dispositif de freinage suivant l'une des revendications 1 à 13, **caractérisé en ce que,** pour le fonctionnement sans mécanicien, un système de capteur, pour le contrôle de la section de voie, est raccordé à l'interface d'entrée.

15. Dispositif de freinage suivant l'une des revendications 1 à 14, **caractérisé en ce que** la au moins une unité de commande de freinage fait partie d'une centrale qui est reliée sans fil à son interface d'entrée et au système de bus de données.
